# EUROPEAN PATENT APPLICATION

(11) **EP 1 187 350 A2**
(43) Date of publication of application: **13.03.2002**
(21) Application number: 01304461.5
(22) Date of filing: 21.05.2001
(51) Int. Cl.: H04B 1/20, H04L 12/28

(54) **Information exhange apparatus and information exchanging method**

(30) Priority: 21.08.2000 JP 2000250015
(71) Applicant: KABUSHIKI KAISHA TOSHIBA, Kawasaki-shi, Kanagawa-ken 210-8572 (JP)
(72) Inventor: Sugiyama, Hiroshi, c/o Intellectual Property Div., Minato-ku, Tokyo 105-8001 (JP); Doi, Miwako, c/o Intellectual Property Division, Minato-ku, Tokyo 105-8001 (JP)
(74) Representative: Luckhurst, Anthony Henry William

(57) **Abstract**

There is disclosed an information exchange apparatus in which apparatus name information and address information of a display (140) or headphone (120) are transferred to a DVD reproduction apparatus (100) from the display (140) or headphone (120) via a path of an infrared ray or the like different from a radio path for exchanging information. The information are registered in the DVD reproduction apparatus (100). The DVD reproduction apparatus (100) on a transmission side transmits video and audio information based on information concerning the display (140) or headphone (120) as a reception side registered in the reproduction apparatus, and the display (140) or headphone (120) on the reception side receives the video and audio information transmitted to the display or headphone.

## Description

The present invention relates to an information exchange apparatus and information exchanging method for exchanging information with the other apparatus.

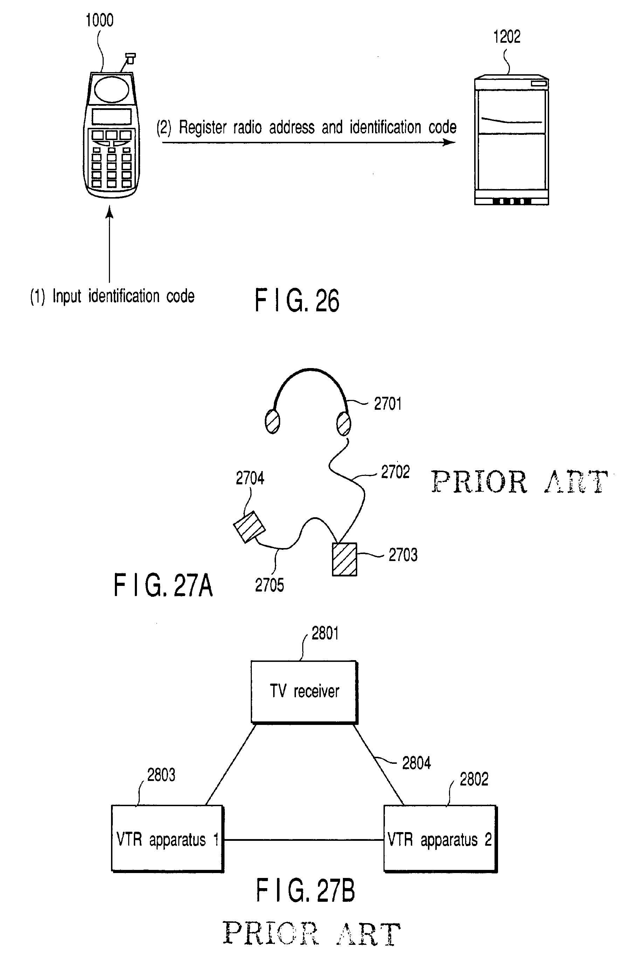

In an electronic apparatus whose function can be constituted by combining and connecting PC with a plurality of apparatuses such as a peripheral apparatus and AV apparatus, as shown in FIGS. 27A, 27B, cable connection has heretofore been used as a main method of connecting the apparatuses to one another.

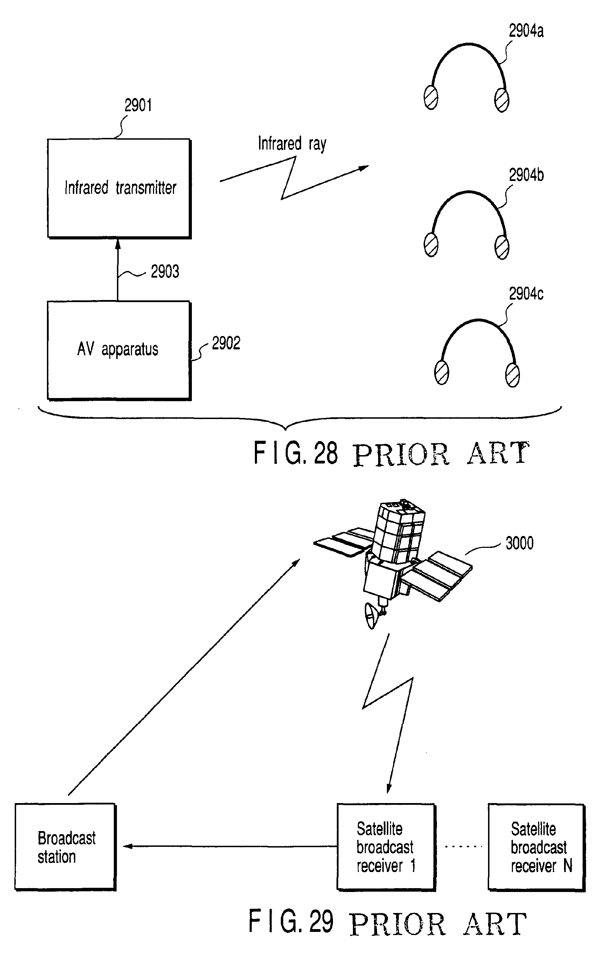

As an example of cable-less connection, as shown in FIG. 28, a headphone apparatus for transmitting sound via an infrared transmitter for exclusive use is on the market. A listener can freely move with a pair of headphones put thereon and this is very convenient. Infrared cable-less communication has an advantage that a plurality of people can simultaneously enjoy the same music, and is suitable for home and indoor applications. However, it is impossible to specify the other apparatus for communication, and this communication system is not suitable for outdoor applications in which a plurality of people simultaneously enjoy separate pieces of music. Moreover, with an infrared ray, a reception range is limited, and an influence of an obstacle is also exerted. Therefore, the cable-less communication by a radio wave is desired. However, since the communication is regulated by a law and a radio device is expensive, it has heretofore been difficult to apply the cable-less connection to a general product.

On the other hand, in recent years, with appearance of low-output and inexpensive radio devices such as Bluetooth™, the radio connection has increasingly been realized in the general product. Therefore, a system for radio-connecting a reproduction apparatus, headphone and display to one another, which have heretofore been connected via a cable, is expected to spread. Moreover, since a restriction of wire connection is eliminated, a different way of putting on the apparatus, and a module product can be realized. For example, a reproduction apparatus can be kept in a bag or the like, and does not have to be put on. From these merits, it is expected that radio connection of various apparatuses will spread from now on.

Additionally, when many people enjoy music outdoors with the apparatuses radio-connected as described above, one needs to be able to have music or image of one's carried playback only with one's headphones or display. Different from the cable connection, the radio wave for the radio connection diverges in all directions. Therefore, to specify the other apparatus for the radio communication and perform the communication, a transmission side adds identification information for specifying a receiving apparatus to information and transmits the information. A reception side needs to catch only the radio wave transmitted to the reception side. Furthermore, when safety is regarded as important, data content to be transmitted needs to be encrypted. That is, in order to perform the radio communication in which the other apparatus is specified, the transmission side or the reception side must know at least identification information for specifying the communication apparatus.

At present, for example, for a generally utilized cellular phone, numbers for identifying individual cellular phones are determined in the form of telephone numbers for the individual cellular phones. When the telephone number of the other cellular phone is inputted, communication is realized with the specific cellular phone.

As another example, pay broadcast by an artificial satellite will be described. As shown in FIG. 29, anyone can receive a broadcast radio wave transmitted from the satellite via a satellite broadcast receiver installed in each home, but received data is encrypted. Only a specific contractor who has concluded a contract with a broadcast company and has been given a key for decoding the data or who has given a key for effecting a decoding function of the receiver can be a viewer of a program.

In the former communicating method in which the other apparatus is specified, the transmission side requires the telephone number, IP address and another information for specifying the other apparatus. In the latter communicating method in which broadcast data is scattered, the reception side requires the decoding key, cancel key and another information for deciphering the data. In either case, one can communicate with the specific apparatus by obtaining such information beforehand from the other side by some means.

With the cellular phone, each telephone number is registered in a memory of the cellular phone by a telephone company during contract. Basically, one conveys one's own telephone number to the other one from whom a telephone call is desired to be received. In this case, the information necessary for the communication is transmitted.

In the satellite broadcast, an inherent ID is given to the satellite broadcast receiver during shipping. A utilizer who wants to be a viewer of satellite broadcast concludes a contract with the broadcast company. Then, the broadcast company telephone number stored during shipping is dialed to inform the receiver ID, and the cancel key or the like is transmitted to the utilizer via a telephone circuit or via satellite broadcast.

As described above, in the existing apparatus, the information for specifying the communication apparatus is stored beforehand so that the communication can be performed only with the specific apparatus, or the information is inputted and given later via a button or another input interface.

In the existing product, the communication can be performed only with a specific combination of the transmission and reception sides. However, various apparatuses are connected to one another via radio from now on. For the general product, the utilizer generally purchases various makers' products separately and combines and uses the products. Therefore, the utilizer has to set the purchased products by oneself. For example, the utilizer has to perform settings, for example, by inputting headphone information to a portable stereo, so that radio communication can be realized between the portable stereo manufactured by S company and purchased at Akihabara and a headphone manufactured by K company and purchased at Shinjuku. This operation increases in a combined manner as the apparatus increases. Therefore, it is important to develop a method which can easily be achieved by anyone. However, there is no such means under existing circumstances.

Furthermore, with the cellular phone or another apparatus having a dial button or another input interface, a method of inputting the number as the information for specifying the other apparatus can be achieved. However, when the apparatus is miniaturized and a module apparatus is increasingly developed, a ratio of apparatuses having no operation panel supposedly increases. Therefore, it becomes important in future to be able to register the information of the communication apparatus even in the radio headphone or another apparatus having no input interface to be operated by a user. However, there is no such means under the existing circumstances.

Examples of the apparatus having no input interface to be operated by the user include a dial-up router. Such apparatus is connected to a personal computer and set via utility software on the personal computer. In the general product, it is wasteful to dispose another expensive apparatus for performing a registration operation. Moreover, anyone cannot easily perform the operation.

As described above, in order to specify the other apparatus and perform the radio communication, the transmission or reception side has to know the identification information for specifying the communication apparatus. In the conventional art, the identification information is predetermined and stored in the apparatus, or inputted later via the button or another operation interface. However, considering from the spread of various apparatuses from now on, it is necessary to provide a simple operation which can easily be performed by anyone. Alternatively, it is necessary to automatically perform the operation without allowing the user to be conscious of the operation. Moreover, a method applicable even to the apparatus having no button or another operation interface is necessary.

The present invention has been developed in consideration of the aforementioned circumstances and an object thereof is to provide an information exchange apparatus and information exchanging method which can arbitrarily and easily set and cancel an information exchange connection relation among apparatuses.

According to the present invention, there is provided an information exchange apparatus comprising a communication information exchange device configured to transmit communication information of a first apparatus to a second apparatus, the communication information including identification information which is used for making the second apparatus to specify the first apparatus to start a radio communication, a radio communication device associated with the first apparatus configured to communicate with the second apparatus by radio, and a controller, connected between the communication information exchange device and the radio communication device, configured to make the radio communication device to start the radio communication with the second apparatus after transmitting the communication information to the second apparatus.

According to the present invention, there is provided an information exchange apparatus comprising a communication information exchange device configured to transmit communication information of a first apparatus to a second apparatus, the communication information including identification information which is used for making the second apparatus to specify the first apparatus to start a radio communication, or receive communication information from the second apparatus, the communication information of the second apparatus including identification information which is used for making the first apparatus to specify the second apparatus to start the radio communication, a radio communication device associated with the first apparatus configured to communicate with the second apparatus by radio, and a controller, connected between the communication information exchange device and the radio communication device, configured to make the radio communication device to start the radio communication with the second apparatus after transmitting the communication information of the first apparatus to the second apparatus or receiving the communication information from the second apparatus.

According to the present invention, there is provided an information exchange apparatus comprising a first device disposed in a remote control associated with a first apparatus, the first device including a transmitter configured to transmit communication information of the first apparatus to a second apparatus, the communication information including identification information which is used for making the second apparatus to specify the first apparatus to start a radio communication, a second device configured to receive communication information of the second apparatus, the communication information including identification information which is used for making the first apparatus to specify the second apparatus to start the radio communication, a radio communication device associated with the first apparatus configured to communicate with the second apparatus by radio, and a controller configured to make the radio communication device to start the radio communication with the second apparatus.

According to the present invention, there is provided a ticket gate system which is communicate with a user's terminal by radio, the system comprising, a reader configured to read communication information of the user's terminal from a storing medium inserted through an inlet slot, the communication information including identification information which is used for making the ticket gate system to specify the user's terminal to establish a connection of radio communication, a radio communication device disposed in the ticket gate system configured to communicate with the user's terminal by radio, and a ticket inspection device configured to make the radio communication device to receive ticket information from the user's terminal by specifying the user's terminal based on the communication information read by the reader, perform a ticket inspection processing by using of the received ticket information, and eject the storing medium through an outlet slot after the ticket inspection processing.

According to the present invention, there is provided a method of a radio communication between first and second apparatuses, the method comprising the step of transmitting communication information of the first apparatus to the second apparatus, the communication information including identification information which is used for making the second apparatus to specify the first apparatus to start a radio communication, the step of establishing a connection between the first and second apparatuses by using of the communication information, and the step of starting a radio communication by a radio communication device associated with the first apparatus after transmitting the communication information to the second apparatus.

According to the present invention, there is provided a method of a radio communication between first apparatus which is associated with a remote control and a second apparatus, the method comprising the step of transmitting communication information from the remote control to the second apparatus, the communication information including identification information which is used for making the second apparatus to specify the first apparatus to start a radio communication, the step of establishing a connection between the first and second apparatuses by using of the communication information, and the step of starting a radio communication by a radio communication device associated with the first apparatus after transmitting the communication information to the second apparatus.

According to the present invention, there is provided a method of a radio communication between a ticket gate system and a user's terminal, the method comprising the step of reading communication information of the user's terminal from a storing medium which is inserted into the ticket gate system through an inlet slot, the step of specifying the user's terminal and establishing a connection of radio communication by using of the read communication information, the step of receiving ticket information from the user's terminal to the ticket gate system based on the established connection, the step of performing a ticket inspection processing by using of the received ticket information, and the step of ejecting the storing medium through an outlet slot after the ticket inspection processing from the ticket gate system.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a diagram showing an example of a portable apparatus system subjected to radio connection in a embodiment of the present invention.

FIG. 2A is a diagram showing a first constitution example of a radio connection apparatus in the embodiment of the present invention.

FIG. 2B is a diagram showing a second constitution example of the radio connection apparatus in the embodiment of the present invention.

FIG. 2C is a diagram showing a third constitution example of the radio connection apparatus in the embodiment of the present invention.

FIG. 3 is a diagram showing a constitution example of a communicator in the embodiment of the present invention.

FIG. 4A is a diagram showing a first example of connection among apparatuses in the embodiment of the present invention.

FIG. 4B is a diagram showing a second example of connection among the apparatuses in the embodiment of the present invention.

FIG. 4C is a diagram showing a third example of connection among the apparatuses in the embodiment of the present invention.

FIG. 4D is a diagram showing a fourth example of connection among the apparatuses in the embodiment of the present invention.

FIG. 5 is a flowchart showing one example of an operation procedure during exchange of communication information with another apparatus in the embodiment of the present invention.

FIG. 6 is a diagram showing one example of the communication information in the embodiment of the present invention.

FIG. 7 is a flowchart showing one example of the operation procedure on a transmission side in the embodiment of the present invention.

FIG. 8 is a flowchart showing one example of the operation procedure on a reception side in the embodiment of the present invention.

FIG. 9 is a flowchart showing one example of an operation procedure for deleting the communication information in the embodiment of the present invention.

FIG. 10 is a diagram showing another example of the communication information in the embodiment of the present invention.

FIG. 11A is a diagram showing an apparatus constitution example of a remote control system in the embodiment of the present invention, and a diagram showing a remote control side constitution.

FIG. 11B is a diagram showing an apparatus constitution example of the remote control system in the embodiment of the present invention, and a diagram showing a reception side constitution.

FIG. 12 is an explanatory view showing an example in which a TV (television) receiver remote control is used to register a VTR (video tape recorder) apparatus in the TV receiver in the embodiment of the present invention.

FIG. 13 is an explanatory view showing an example in which the TV receiver remote control is used to mutually register the VTR apparatus and TV receiver in the embodiment of the present invention.

FIG. 14 is an explanatory view showing connection among three or more apparatuses in the embodiment of the present invention.

FIG. 15 is an explanatory view showing one example of a registering method among three or more apparatuses in the embodiment of the present invention.

FIG. 16 is an explanatory view showing another example of the registering method among three or more apparatuses in the embodiment of the present invention.

FIG. 17 is an explanatory view showing a example of communication via another apparatus in the embodiment of the present invention.

FIG. 18 is an explanatory view showing an example applied to an advertisement in the embodiment of the present invention.

FIG. 19 is a diagram showing one example of communication information with a group ID added thereto in the embodiment of the present invention.

FIG. 20 is an explanatory view showing an example applied to a POS (Point Of Sales) terminal in the embodiment of the present invention.

FIG. 21 is an explanatory view showing one example of a communication procedure with the POS terminal in the embodiment of the present invention.

FIG. 22 is an explanatory view showing an example applied to an automatic ticket gate system in the embodiment of the present invention.

FIG. 23 is an explanatory view showing one example of the communication procedure with the automatic ticket gate system in the embodiment of the present invention.

FIG. 24 is an explanatory view showing another example of the communication procedure with the automatic ticket gate system in the embodiment of the present invention.

FIG. 25 is an explanatory view showing still another example of the communication procedure with the automatic ticket gate system in the embodiment of the present invention.

FIG. 26 is an explanatory view showing one example of a registration procedure to a communication information server in the embodiment of the present invention.

FIG. 27A is an explanatory view showing one example of a connection form among conventional apparatuses.

FIG. 27B is an explanatory view showing another example of the connection form among the conventional apparatuses.

FIG. 28 is an explanatory view showing conventional wireless communication in which an infrared ray is utilized.

FIG. 29 is an explanatory view showing a conventional satellite broadcast communication system.

A preferred embodiment of the present invention will be described hereinafter with reference to the drawings.

### (First Embodiment)

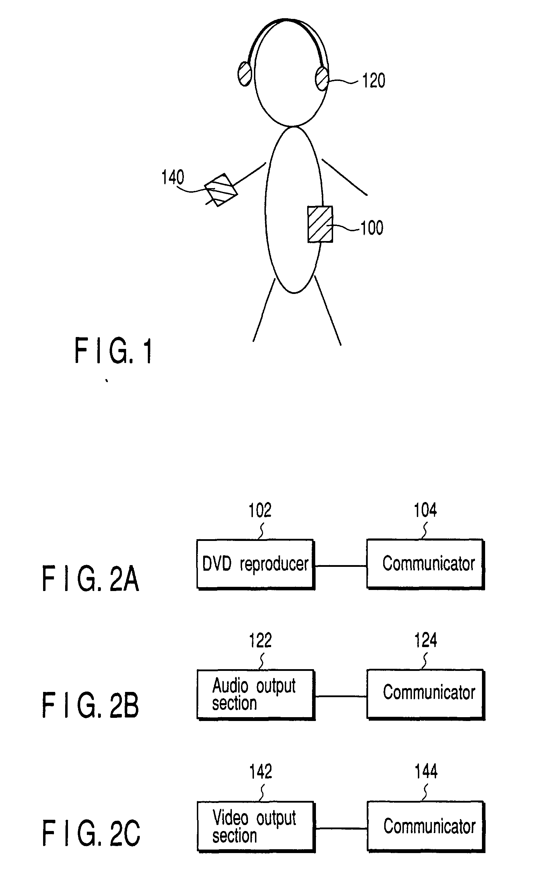

FIG. 1 shows an example of a portable DVD (Digital Versatile Disk) viewing system. This system is constituted of a DVD reproduction apparatus 100, a pair of headphones 120, and display 140, and necessary apparatuses are connected to one another by radio communication. Additionally, FIG. 1 shows that the DVD reproduction apparatus 100 is attached to a user's waist, the headphones 120 are attached to a head, and the display 140 is attached to a wrist.

FIGS. 2A to 2C show basic constitution examples of the respective apparatuses, that is, the DVD reproduction apparatus 100, headphones 120 and display 140. As shown in FIG. 2A, the DVD reproduction apparatus 100 is constituted of a DVD reproducer 102 and communicator 104. As shown in FIG. 2B, the headphone 120 is constituted of a audio output section 122 and communicator 124. As shown in FIG. 2C, the display 140 is constituted of a video output section 142 and communicator 144.

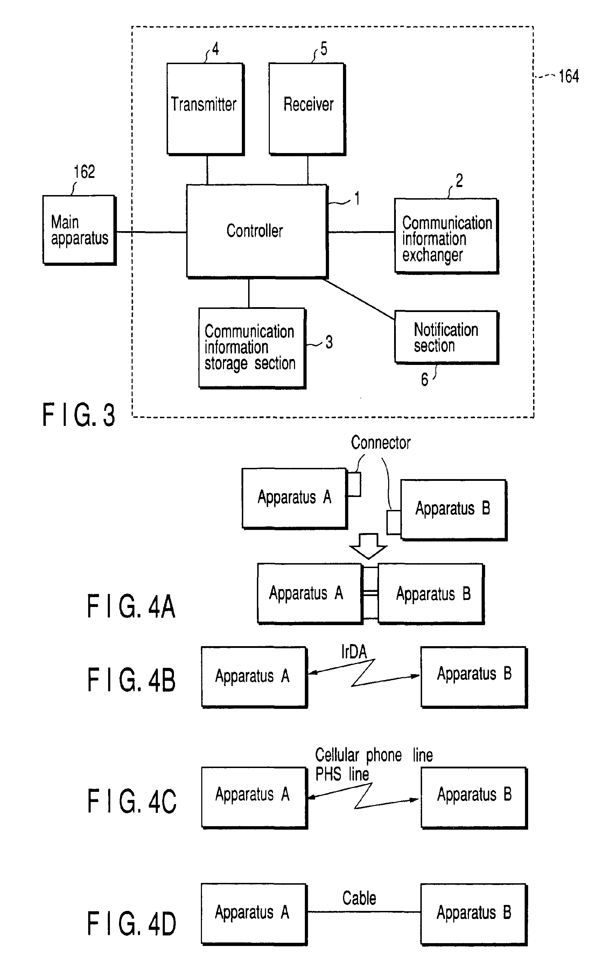

FIG. 3 shows a constitution example of the communicator (102, 122, 142).

In FIG. 3, a communicator 164 is shown in a dotted frame, and a main apparatus 162 shows an apparatus main part including the DVD reproduction apparatus 100, headphones 120 and display 140 of FIG. 2. Of course, the main apparatus may be an apparatus main part other than the DVD reproduction apparatus, headphones and display (i.e., the communicator can be applied to any apparatus).

The communicator (102, 122, 142) is constituted of: a transmitter 4 for transmitting information; a receiver 5 for receiving the information; a communication information storage section 3 for accumulating information necessary for communicating with a specific party; a communication information exchanger 2 for exchanging the information necessary for communicating with the specific party with another apparatus; a notification section 6 for notifying an operator of an end state of information exchange with the other apparatus via the communication information exchanger 2; and a controller 1 for controlling the information exchange performed with the other apparatus via the communication information exchanger 2 and controlling the transmitter 4 and receiver 5 in accordance with the information of the communication information storage section 3 to transmit/receive communication data from the other apparatus by the main apparatus.

Additionally, the information obtained from the other apparatus via the communication information exchanger 2 and stored in the communication information storage section 3 will be referred to as "communication information".

Here, a method of realizing the communication information exchanger 2 will be described.

FIGS. 4A to 4D show several examples of the method of realizing the communication information exchanger 2. FIG. 4A shows a method of physically connecting connectors of apparatuses A and B to each other, FIG. 4B shows a method of using directional radio communication means such as IrDA (Infrared Data Association), FIG. 4C shows a method of using a public line (e.g., cellular phone, PHS (personal handyphone system)) to connect the apparatuses to each other, and FIG. 4D shows a method of connecting the apparatuses to each other via a cable for exclusive use. In any case, the information can be exchanged with the specific party via a communication path having secrecy, and therefore the method may be selected in accordance with situations of the apparatus of a field to which the present invention is applied. For example, the method of FIG. 4A is suitably applied to the headphones, a sensor unit and another apparatus having no operation panel. Moreover, the method of FIG. 4B is suitable for a stationary type audio-visual apparatus and another apparatus equipped beforehand with an infrared unit.

Moreover, in addition to the aforementioned examples, there are various methods of: inputting the information via a bar code; inputting the information via Bluetooth™ and another short distance radio, or OCR (Optical Character Reader); inputting the information via a recording medium; and manually inputting the information. The method may be selected in accordance with the situations of the apparatus of the field to which the present invention is applied.

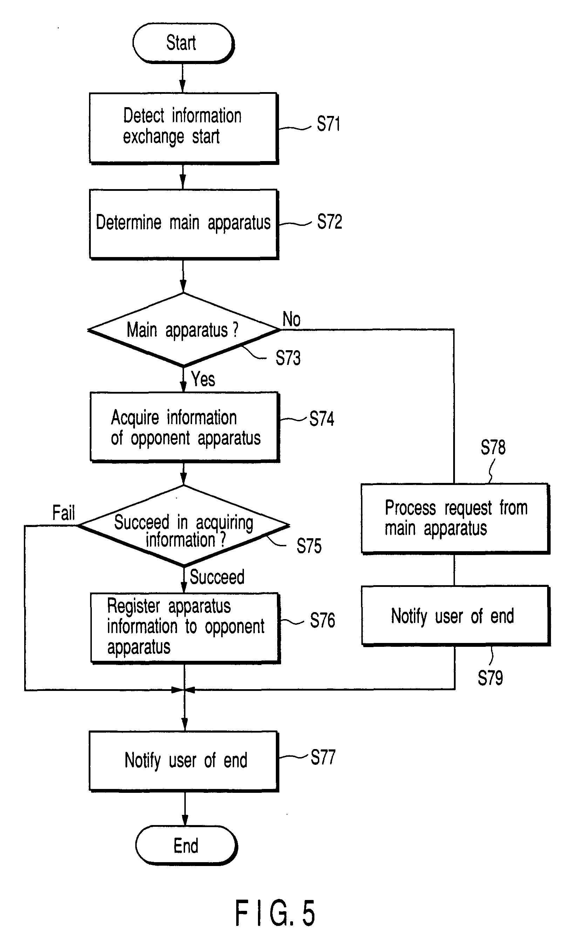

A registration procedure for performing communication between two apparatuses having the communicator of FIG. 3 will next be described. FIG. 5 shows one example of the procedure.

First, a state for exchanging communication information is obtained via the communication information exchanger 2 of each apparatus. For example, the apparatuses are connected to each other in the method shown in FIG. 4.

On completing the connection of the communication information exchangers 2, the communication information exchanger 2 notifies the controller 1 of start of information exchange with the other apparatus (step S71). Examples of means for judging the start of the information exchange include: a method of disposing a switch in a joint of the communication information exchanger 2 and automatically judging the start when the exchanger is joined; a method of clearly indicating the start when the user operates the switch; and the like.

When the start is indicated, the controller 1 determines via the communication information exchanger 2 that either the apparatus or the other apparatus takes initiative in an information exchange operation (step S72).

In a determining method, for example, a main/sub relation is predetermined in a combination of apparatuses such as the DVD reproduction apparatus and headphone, the relation is designated by a user's operation on the side of the apparatus having the operation interface, or the apparatus which has first issued a request is determined as the main apparatus.

The operation of the controller 1 is changed depending upon whether the apparatus becomes the main apparatus in information exchange control (step S73).

When the apparatus becomes the main apparatus, the apparatus requests the other apparatus for the communication information via the communication information exchanger 2, judges whether or not the obtained communication information is information to be registered, and stores the information to be registered in the communication information storage section 3 (step S74).

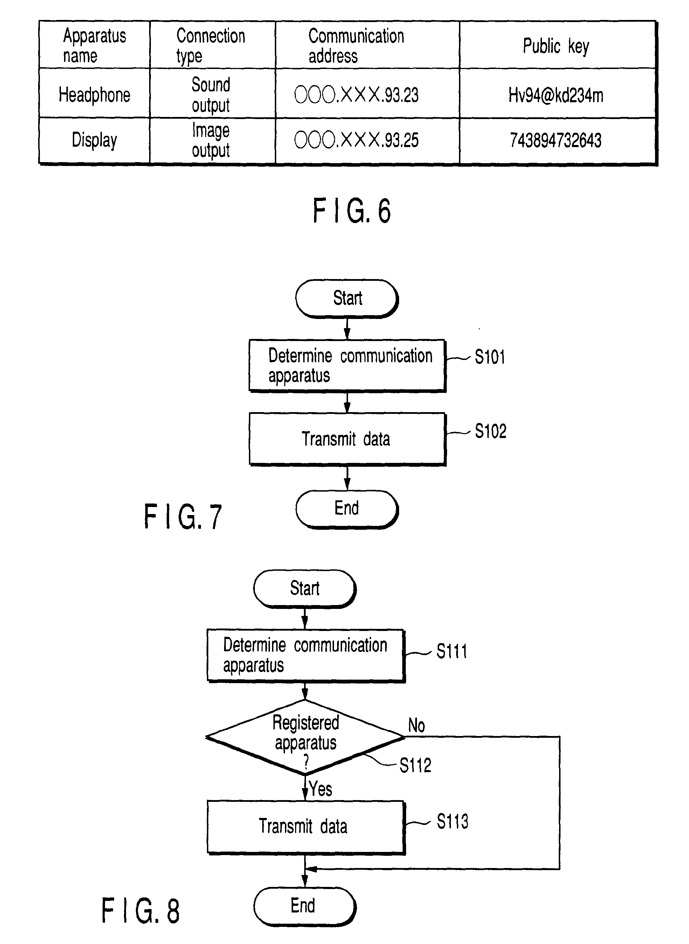

Here, FIG. 6 shows one example of the communication information. This is an example of headphone or display communication information registered in the DVD reproduction apparatus of FIG. 1.

In the communication information of FIG. 6, an apparatus name is information indicating the other apparatus name, apparatus type, and the like, and is an item for distinguishing the apparatus (function).

A connection type is an item indicating a connection content with the apparatus. In the example of FIG. 6, connection relation such as "connection to a terminal" in the conventional cable connection is indicated (more concretely, the same content as that of the connection of the headphone to a audio output terminal of the DVD reproduction apparatus is indicated).

A communication address is identification information which is determined in a radio system protocol for use in transmission/reception of contents and other data to specify the communication apparatus.

Additionally, to encrypt the communication content, a communication apparatus public key or another item may be disposed. Other items may appropriately be disposed if necessary.

Moreover, to store other apparatus communication information, control information (e.g., service life information) may be added to the communication information and stored.

To judge the communication information to be registered, for example, the controller 1 judges from the apparatus name and connection type of FIG. 6 whether or not the other apparatus can be connected to the apparatus (DVD reproduction apparatus in this example).

Here, when the information is not the communication information to be registered in step S75, the flow advances to step S77.

When the information is the communication information to be registered in the step S75, the communication information of the apparatus is transmitted to the other apparatus and registration is instructed (step S75). Subsequently, the flow advances to the step S77.

On the other hand, when its own apparatus is not the main apparatus, the communication information of its own apparatus is returned according to a request from the main apparatus, and the transmitted communication information of the other apparatus is stored in the communication information storage section 3 of its own apparatus (step S78). Additionally, when the transmitted communication information of the other apparatus is a code indicating an error, the information is not stored. Subsequently, its own apparatus is notified of an end of information exchange processing from the main apparatus (step S79), and the flow further advances to the step S77.

When the information exchange processing ends, the user performing the registration operation is notified of the processing end via the notification section 6 (step S77).

When the information exchange normally ends and/or when the information exchange does not normally ends, the controller 1 notifies the user of a success or an error in the information exchange. Examples of notification means for the apparatus having no display panel include a buzzer and an LED (Light Emitting Diode) to be lit. Additionally, when the information exchange normally ends or does not normally end, and notification is performed via the buzzer or the lit LED, a method of ringing the buzzer or lighting the LED is changed during the normal end or the error end, so that normal notification can be distinguished from error notification. Moreover, when the processing of the communication information to be registered cannot normally be ended for some reason, this situation may be notified so that the situation can be distinguished. Of course, the notification may be given to the apparatus having the display panel, and the like via character or image information, or by using another audio information in a combined manner.

An operation for registering the communication apparatus ends in this manner.

Additionally, it is also possible to set a function of either the main apparatus or the sub apparatus in the apparatus in a fixed or static manner. Only the function necessary for the main apparatus or the sub apparatus may be mounted on the apparatus which is fixed as either one of the main and sub apparatuses.

Moreover, for example, for the headphone or another apparatus for exclusive use in reception, a method in which the communication information of the communication apparatus is not registered may be used (the receiver may only receive the communication data directed to its own apparatus). In this case, the apparatus may have a function of notifying the transmission side apparatus of its own transmission information, and may not have a function of receiving or registering the communication information of the transmission side apparatus into the apparatus.

An operation for using the registered communication information and specifying the other apparatus to perform the communication will next be described.

Here, an example in which the headphone 120 and display 140 are registered in the DVD reproduction apparatus 100 as shown in FIG. 6 will be described.

First, the operation on the transmission side (in this example, the operation of the DVD reproduction apparatus) will be described. FIG. 7 shows one example of the operation procedure.

When the DVD reproduction apparatus 100 is turned on, the controller 1 reads the communication information of the headphone 120 and display 140 registered in the communication information storage section 3, and determines a communication address of the party to which respective signals of the image and sound are transmitted (step S101). In this case, the apparatus able to be used at present may be selected from a plurality of registered apparatuses by transmitting a confirmation signal to the party beforehand and confirming a reply indicating that the other apparatus can receive the information. Moreover, if any reply is not received from any apparatus, the user may be notified of a state in which there is no registered apparatus, the apparatus is not registered yet, or the other apparatus is not turned on or is in a certain abnormal state. Moreover, the apparatuses able to be utilized may be indicated so that the user can select the apparatus.

Subsequently, when the user instructs the DVD reproduction apparatus 100 to reproduce the information, the DVD reproducer 102 (see FIG. 2) transmits image and audio signals to the communicator 104. The transmission section 4 (see FIG. 3) in the communicator converts the signal from the DVD reproducer 102 to communication data in accordance with the communication protocol, and transmits the communication data to the predetermined communication address of the headphone 120 and display 140 (step S102).

Subsequently, an operation on the headphone side as the reception side will be described. FIG. 8 shows one example of the operation procedure.

The receiver 5 (see FIG. 3) of the headphone 120 receives the data transmitted to its own communication address, and checks whether a transmitter is the party registered in the communication information storage section 3 (step S101). When communication is given to the headphone from a plurality of registered apparatuses, for example, the user selects the apparatus via a changeover switch.

When the registered apparatus is selected as the communication apparatus, the communication data from the apparatus is successively converted to the audio signal, and the audio output section 122 (see FIG. 2) outputs a sound (step S103). If the apparatus is not the registered party, nothing is performed.

The display 140 also performs an operation similar to that of the headphone 120 to output the video from the registered party apparatus.

Here, an example in which the communication content is encrypted will be described with reference to FIG. 6. The DVD reproduction apparatus 100 uses the public key of the headphone or the display stored in the communication information storage section 3 to encrypt the data to be transmitted and transmits the data via the transmission section 4. On the reception side, the receiver 5 uses its own secret key to decode the transmitted and obtained communication data, and obtains audio data or video data.

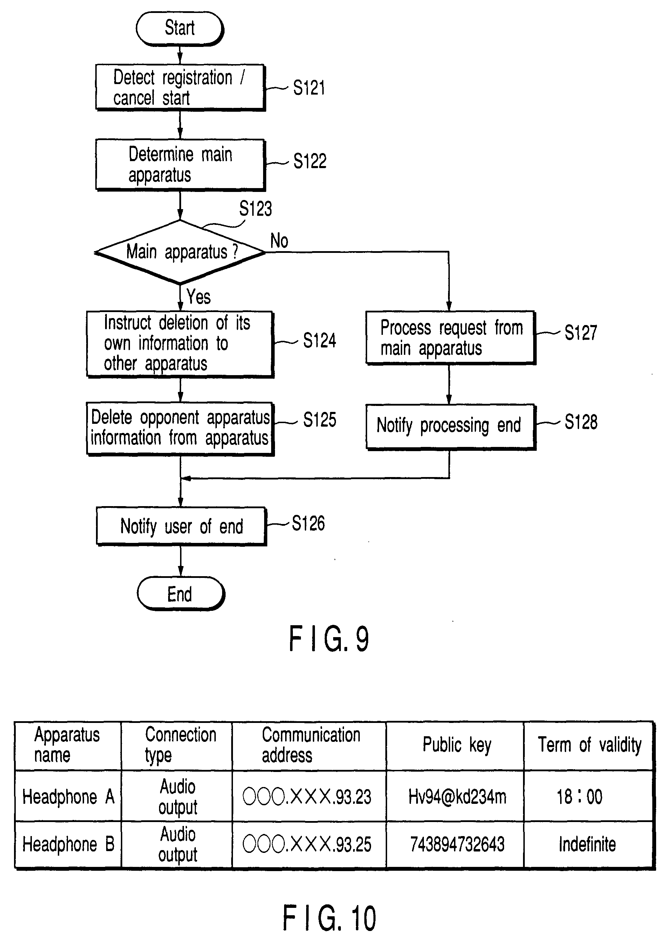

A method of canceling the registration of the registered apparatus will next be described. FIG. 9 shows one example of the procedure.

As the method of canceling the registration of the apparatus registered as the communication apparatus, several methods are considered. With the apparatus having the operation interface from the user, a method of canceling the registration by the user's operation is considered. Moreover, with the headphone or another apparatus having no operation interface from the user, a method of connecting the communication information exchangers 2 (see FIGS. 3 and 4) to each other again to mutually cancel the registration is considered. In a method in which the communication information exchanger 2 judges a registration cancellation start with the other apparatus, the communication information exchanger 2 detects the connection with the other apparatus and judges whether the apparatus is the registered apparatus. In another method, a cancellation switch is disposed in the communication information exchanger 2 separately from a registration switch, and the cancellation switch is turned on by a certain connection method. Alternatively, the user operates the switch or the like and judges the start of the registration cancellation of the communication information.

Additionally, when indication of the start of the registration deletion is detected by a predetermined method (step S121), the controller 1 determines that the apparatus or the other apparatus takes the initiative in the registration deletion operation via the communication information exchanger 2 (step S122). In the determining method, for example, the main/sub relation is predetermined in the combination of apparatuses such as the DVD reproduction apparatus and headphone, the relation is designated by the user's operation on the side of the apparatus having the operation interface, or the apparatus which has first issued the request is determined as the main apparatus.

The operation of the controller 1 is changed depending upon whether its own apparatus becomes the main apparatus in registration cancellation (step S123).

When the apparatus becomes the main apparatus, the apparatus requests the other apparatus for deletion of its own communication information via the communication information exchanger 2 (step S124). In the example of the communication information of FIG. 6, the apparatus name is designated and the deletion of the information is instructed.

Subsequently, the communication information of the other apparatus is deleted from its own apparatus (step S125). In the example of the communication information of FIG. 6, the apparatus name of the other apparatus is requested for, and the communication information corresponding to the apparatus name is deleted from the communication information storage section 3.

On the other hand, when the apparatus is not the main apparatus, the communication information of the other apparatus is deleted from its own communication information storage section 3 according to the request from the apparatus, and the other apparatus is notified of the apparatus name or the like of the apparatus (step S127). Subsequently, notification of an end of registration cancellation processing is received from the main apparatus (step S128).

When the registration cancellation processing ends, the user performing the registration cancellation operation is notified of the processing end via the notification section 6 (step S126).

Notification means is similar to that described above in the registration operation.

The communication apparatus registration cancellation operation ends in this manner.

A registering and canceling method for temporarily enabling the communication will next be described.

For example, when one watches the movie together with friend A in the portable video reproduction system of FIG. 1, the headphones (set as A) carried by the friend A are temporarily registered in the DVD reproduction apparatus 100. Similarly as the aforementioned registration procedure, the DVD reproduction apparatus 100 is connected to the communication information exchanger 2 (see FIG. 3, FIG. 4) of the headphones carried by the friend A. In this case, for example, the user operates the operation interface of the DVD reproduction apparatus 100, designates the apparatus subjected to the registration operation now as a temporarily registered apparatus, and designates a registration period. For the registration period, a method of indicating expiry date or hours to designate the term of validity, a method of designating an actual communication time or an actual communication data amount, and a method of designating the number of communication connections are considered.

FIG. 10 shows one example of the communication information. An item of term of validity in FIG. 10 indicates an example of a deletion condition. As shown in this concrete example, registration is made such that the headphone A of the friend A is valid until 18:00 p.m. of that day and own headphone B is indefinitely valid.

The controller 1 of the DVD reproduction apparatus 100 in which the headphone is temporarily registered detects that the designated registration period has elapsed and then deletes the information from the communication information storage section 3.

In addition to the aforementioned method of utilizing the time information to cancel the registration, examples of a method of canceling the temporary registration of the communication information of the communication apparatus include a method of preparing a storage region for temporary communication and successively overwriting every registration to delete the registered information, and the like.

Moreover, the above also applies to a case in which the communication information of the DVD reproduction apparatus is temporarily registered and deleted on the headphone side. Additionally, as described above, with the headphone or another apparatus for exclusive use in reception, the communication information of the temporary communication apparatus is not registered in the method (the receiver may only receive the communication data transmitted to its own apparatus).

Additionally, the headphone communication information includes the item of term of validity as described above, but the term of validity may be determined on the DVD reproduction apparatus side (in this case, the determined item of term of validity may be added to the received communication information and stored).

As described above, according to the present embodiment, the information exchange system in which not only the information exchange among the predetermined apparatuses but also free later change of the connection for the communication among the apparatuses by the apparatus utilizer are achieved can be realized. Moreover, the apparatus having neither button nor another operation interface can be an object. Since inputting of ID or complicated button operation is not necessary for the respective apparatuses, there can be provided an intuitive simple operating method for the utilizer.

### (Second Embodiment)

A basic constitution of a second embodiment is similar to that of the first embodiment. In the second embodiment, an example applied to a household stationary apparatus will be described.

Additionally, the aforementioned connection of the apparatuses by radio communication supposedly spreads not only in the portable apparatus but also in the household apparatus. For example, the connection is expected to be used from now on for connecting TV and VTR (or apparatuses having similar functions) which have now spread in almost all ordinary homes.

In the first embodiment, means for exchanging the communication information with the other apparatus is built in a highly portable apparatus main body. In a stationary large-sized apparatus, however, the method of physically connecting the connectors to each other as shown in FIG. 4A is inappropriate. Moreover, the apparatus cannot be handled only with the method of using IrDA of FIG. 4B, and the method of connecting the apparatuses via the exclusive-use cable of FIG. 4C is intricate. Therefore, another preferred operating method is required for the stationary large-sized apparatus. In the second embodiment, an example will be described in which a function for exchanging the communication information is disposed separately in an independent unit such as a remote controller.

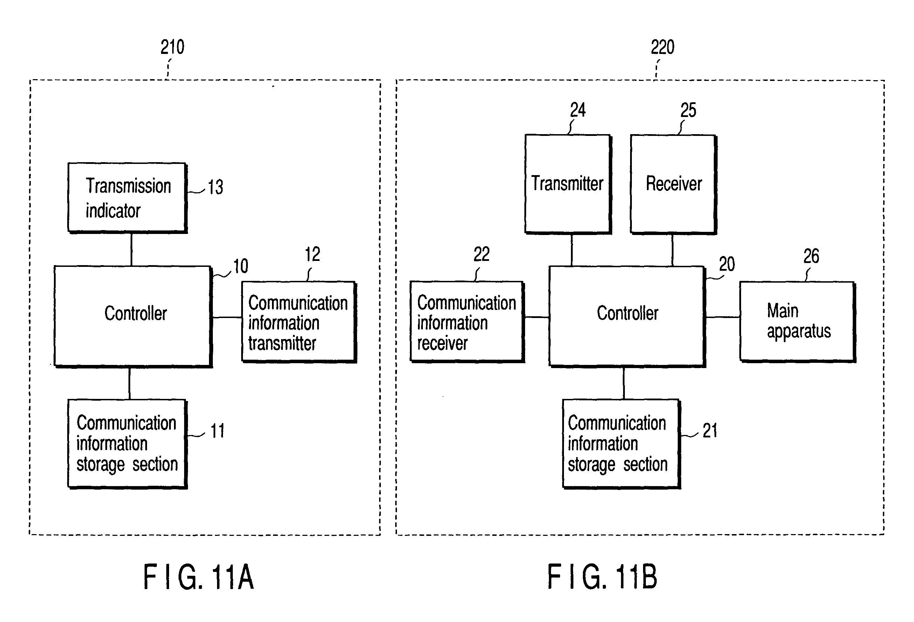

FIGS. 11A and 11B show a constitution example of a remote controller 210 for transmitting the communication information of an apparatus 220 with the remote controller attached thereto and the apparatus 220 as a parent apparatus for receiving the other apparatus communication information via the remote controller of the other apparatus.

The constitution of FIGS. 11A and 11B is basically constituted by dividing the constitution of FIG. 3 of the first embodiment into two, that is, an apparatus main body side and remote controller side.

Additionally, there can be an apparatus having both constitutions of FIGS. 11A and 11B, an apparatus having the constitution of FIG. 11A but having no constitution of FIG. 11B (apparatus only for transmitting its own communication information to the other apparatus), and an apparatus having the constitution of FIG. 11B but having no constitution of FIG. 11A (apparatus only for receiving the communication information of the other apparatus).

A communication information storage section 11 stores the communication information of the apparatus 220 such as TV receiver as the parent apparatus of the remote controller 210. As the communication information, the content shown in FIG. 6 or FIG. 10 is stored.

On the remote controller side, a communication information transmitter 12 is means for transmitting its own communication information to an apparatus in which the communication information is to be registered. For example, infrared transmission means generally used in an electric product, and the like are used. The infrared ray or another transmission means which is directional and cannot pass through obstacles such as a wall is used. In this case, important own apparatus information can be transmitted to a specific household apparatus.

A transmission indicator 13 is means for indicating a transmission start of communication information, and is realized, for example, by operating the button.

A controller 10 controls these respective sections.

On the other hand, on the apparatus main body side, a main apparatus 26 is a main part of the apparatus, and is, for example, a part for recording and reproducing the video of VTR when the apparatus is a VTR apparatus (see FIG. 2).

A communication information storage section 21 is means for storing the communication apparatus communication information transmitted from the remote controller of the destination apparatus.

A communication information receiver 22 is means for receiving a signal from the communication information transmitter 12 of the remote controller.

A transmitter 24 is means for transmitting a signal from the main apparatus 26 in accordance with the communication information stored in the communication information storage section 21.

A receiver 25 is means for transmitting the received signal to the main apparatus 26 in accordance with the communication information stored in the communication information storage section 21.

A controller 20 is means for controlling these respective sections and the information exchanged among the sections to control the communication.

An operation procedure of using an infrared remote controller to connect VTR apparatus to TV receiver for communication will be described hereinafter.

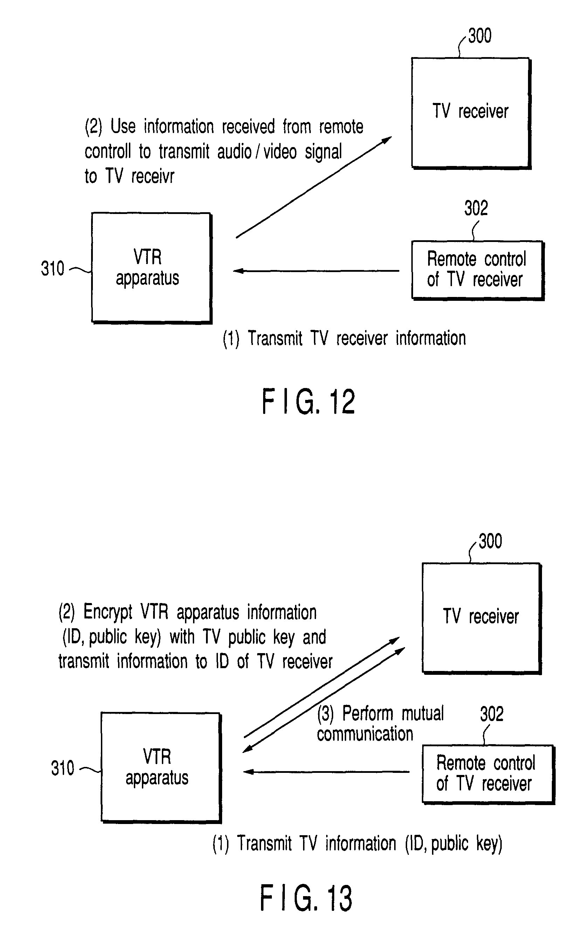

In FIG. 12, the communication information of a TV receiver 300 is stored in the communication information storage section 11 of "TV receiver remote controller" 302. The remote controller has a function of transmitting its own communication information stored in the communication information storage section 11 via the communication information transmitter 12 by an operation of a button of the remote controller 302 as the transmission indicator 13. The remote controller 302 is directed to a VTR apparatus 310 to be communicated with/connected to the TV receiver 300, the operation of transmitting the communication information to the VTR apparatus is performed, and the communication information of the TV receiver 300 is stored in the VTR apparatus 310. A signal from the remote controller 302 is received by an infrared ray receiver (not shown) as the communication information receiver 22 on the side of the VTR apparatus 310. Then, the communication information of the TV receiver 300 is stored in the communication information storage section 21 of the VTR apparatus 310.

The operation similar to the aforementioned operation may be performed on the TV receiver 300 by the "remote controller of the VTR apparatus" (not shown) in order to store the communication information of the VTR apparatus 310 in the TV receiver 300. Alternatively, with the stationary apparatus such as the TV receiver 300, the apparatus itself and remote controller cannot be brought outside the home. In this situation, there is little fear that the communication information of the TV receiver 300 leaks out of the home. Therefore, it is unnecessary to store the communication information of the VTR apparatus 310 in the TV receiver 300. When the information is stored, the TV receiver 300 can confirm the transmitter apparatus or can select the transmitter apparatus on the TV receiver 300 side during reception of the communication.

Additionally, as shown in FIG. 13, when the communication information of the VTR apparatus 310 is registered to the TV receiver 300 from the VTR apparatus 310, a method of using the public key of the communication information of the TV receiver 300 transmitted from the remote controller 302 of the TV receiver to encrypt the communication information of the VTR apparatus 310 and transmitting the information to the communication address of the TV receiver 300 can also be used.

By the aforementioned registration operation, the VTR apparatus 310 uses the communication information stored in the communication information storage section 22 to transmit a video/audio signal to the communication address of the TV receiver 300 from the transmitter 24. The TV receiver 300 can output the content received from the receiver 25 as a video/audio via the main apparatus 26. Moreover, the public key of the TV receiver 300 can also be used to encrypt and transmit the video/audio signal.

The example of registering the connection between two apparatuses has been described. However, a registration operation of directing its own remote controller to the apparatus to which its own connection is to be registered is repeated by the number of connection relations to be registered, so that the connection can be registered among many apparatuses.

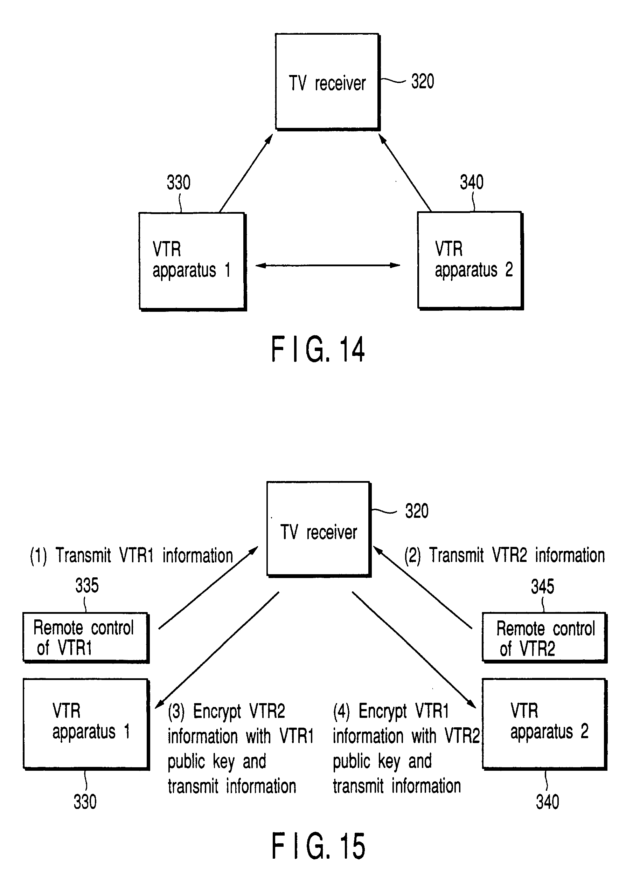

FIG. 14 shows a connection example among three apparatuses. In FIG. 14, respective VTR apparatuses 330, 340 are connected to a TV receiver 320, and the first VTR apparatus 330 is connected to the second VTR apparatus 340. In this case, a connection relation shown by arrows in FIG. 14 can be registered by repeating the registration operation by the remote controller four times.

Additionally, the registration operation by the user's remote controller operation can be facilitated by automatically notifying the communication information among the apparatuses.

Here, a method of disposing a center apparatus, decreasing the number of registration operations, and further simplifying the operating method will be described.

With an AV apparatus group shown in FIG. 14, the center apparatus is the TV receiver. Here, two registration procedures of performing connection registration of two VTR apparatuses centering on the TV receiver will be described.

A first method will be described with reference to FIG. 15.

In the method of FIG. 15, the registration is also performed between the VTR apparatuses by registering the respective VTR apparatus communication information into the TV receiver via the remote controllers of the respective VTR apparatuses. This procedure will be described hereinafter
(1) The communication information of the first VTR apparatus 330 is transmitted to the TV receiver 320 via a remote controller 335 of the first VTR apparatus, and registered in the communication information storage section 3 of the TV receiver 320.
(2) Similarly, the communication information of the second VTR apparatus 340 is transmitted to the TV receiver 320 via a remote controller 345 of the second VTR apparatus, and registered in the communication information storage section 3 of the TV receiver 320.
(3) The TV receiver 320 encrypts the communication information of the second VTR apparatus 340 stored in its own communication information storage section 3 with the public key of the first VTR apparatus 330, and transmits the information to the communication address of the first VTR apparatus 330.
(4) Similarly, the TV receiver 320 encrypts the communication information of the first VTR apparatus 330 stored in its own communication information storage section 3 with the public key of the second VTR apparatus 340, and transmits the information to the communication address of the second VTR apparatus 340.

Here, the TV receiver 320 "selects the apparatus from the apparatuses registered in its own communication information storage section 3 and determines the apparatus communication information to be distributed to the selected apparatus". A judgment method will be described.

The apparatus connected to the TV receiver 320 can transmit the image and sound to the TV receiver 320, and can be an object as an video record source for the other apparatuses having an video recording function. Therefore, the TV receiver 320 may distribute all other apparatus communication information stored in the receiver to the apparatus having the video recording function among the apparatuses stored in its own communication information storage section 3. When a new apparatus is registered in the TV receiver, the communication information of the newly added apparatus is transmitted to the apparatus having the video recording function among the registered apparatuses. Moreover, when the newly added apparatus has the video recording function, the communication information of all other registered apparatuses is transmitted to the new apparatus.

For a method of judging whether a certain apparatus has the video recording function, for example, this may be judged by the apparatus name of the communication information of FIG. 6, or a new item may be added for judgment.

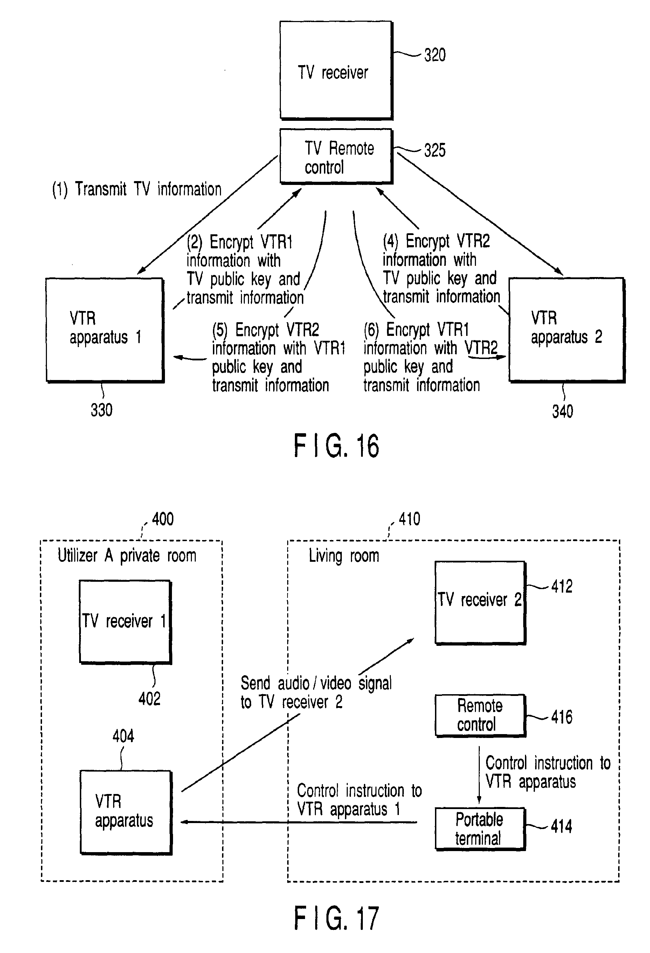

A second method will next be described with reference to FIG. 16.

In the method of FIG. 16, only the remote controller of the TV receiver is used to register all the apparatuses. The procedure will be described hereinafter.
(1) The communication information of the TV receiver 320 is transmitted to the first VTR apparatus 330 from a TV receiver remote controller 325, and stored in the communication information storage section 3 of the first VTR apparatus 330.
(2) The first VTR apparatus 330 uses the public key of the communication information of the TV receiver 320 stored in its own communication information storage section 3 to encrypt its own communication information, and transmits the encrypted information to the communication address of the TV receiver 320.
(3) Similarly, the communication information of the TV receiver 320 is transmitted to the second VTR apparatus 340 from the TV receiver remote controller 325, and stored in the communication information storage section 3 of the second VTR apparatus 340.
(4) Similarly, the second VTR apparatus 340 uses the public key of the communication information of the TV receiver 320 stored in its own communication information storage section 3 to encrypt its own communication information, and transmits the encrypted information to the communication address of the TV receiver 320.
(5) The TV receiver 320 uses the public key of the communication information of the first VTR apparatus 330 stored in its own communication information storage section 3 to encrypt the communication information of the second VTR apparatus 340, and transmits the encrypted information to the communication address of the first VTR apparatus 330.
(6) Similarly, the TV receiver 320 uses the public key of the communication information of the second VTR apparatus 340 stored in its own communication information storage section 3 to encrypt the communication information of the first VTR apparatus 330, and transmits the encrypted information to the communication address of the second VTR apparatus 340.

By the aforementioned operation, only the TV receiver remote controller can be used to register the other apparatuses connected to the TV receiver and connections among the apparatuses.

Additionally, deletion can also be executed by instructing the deletion via the remote controller similarly as described above.

An example of communication via other apparatuses will next be described with reference to FIG. 17.

In FIG. 17, a dotted frame 400 shows a private room of a utilizer A, and the utilizer A usually connects a VTR apparatus 404 to a TV receiver 402 to view a reproduced video of the VTR apparatus 404. Moreover, a dotted frame 410 indicates a living room of the utilizer A, and a second TV receiver 412 and a remote controller 416 with the communication information of the second TV receiver 412 stored therein are disposed in the living room. Moreover, the remote controller 416 described herein has operation buttons for operations of not only the TV receiver but also other apparatuses. A potable terminal 414 is an information terminal usually carried by the utilizer A.

Each of these apparatuses has a communication information exchanger or a communication information receiver, a transmitter, and a receiver (see FIG. 3, FIG. 11), and transmits/receives information to/from the registered apparatus via the communication information exchanger.

According to the aforementioned method, when the remote controller 416 is registered in the portable terminal 414, the communication information of the remote controller 416 and second TV receiver 412 is propagated to the VTR apparatus 404 registered in the portable terminal 414. Additionally, the communication information of the VTR apparatus 404 and portable terminal 414 is similarly propagated to the remote controller 416. Thereby, the remote controller 416 can communicate with the VTR apparatus 404, and the VTR apparatus 404 can communicate with the second TV receiver 412. The first VTR apparatus 404 can be operated with the remote controller 416 to view the video of the first VTR apparatus 404 with the second TV receiver 412.

However, when the VTR apparatus 404 is an exclusive apparatus privately viewed by the utilizer A, and other people are prevented from operating the VTR apparatus 404, the communication information of the VTR apparatus 404 is not transmitted to the remote controller 416. The second TV receiver 412 can preferably be watched by operating the remote controller 416 of the living room. Then, a method of intermediating between the remote controller 416 and the VTR apparatus 404 by the portable terminal 414 without opening the communication information of the VTR apparatus 404 to the remote controller 416 will be described. The procedure will be described hereinafter.

(1) The remote controller is registered in the portable terminal.

The communication information of the remote controller 416 is transmitted to the portable terminal 414 from the remote controller 416, and the communication information of the portable terminal 414 is transmitted to the remote controller 416 from the portable terminal 414.

(2) The communication information registered in the remote controller is propagated to the portable terminal.

The communication information of the second TV receiver 412 stored in the remote controller 416 is propagated to the portable terminal 414.

(3) A part of the communication information registered in the portable terminal is propagated to the remote controller.

During notification of the communication information of the VTR apparatus 404 and first TV receiver 402 stored in the portable terminal 414, the portable terminal 414 uses only the information concerning the apparatus function such as the apparatus name and connection type. For other communication addresses and key information, instead a value of the portable terminal 414 is added to the communication information, and the information is transmitted to the remote controller 416.

(4) An operation object of the remote controller is set.

The second TV receiver 412 is registered as the operation object in the remote controller 416, and the VTR apparatus 404 and first TV receiver 402 are added as other operation objects in the above (3). By the operation of the remote controller 416, the VTR apparatus 404 is set as the operation object of a VTR operation button of the remote controller 416, and the first TV receiver 402 is set as the operation object of a TV operation button. Additionally, the remote controller can have a function of fixing the operation object, and TV receivers other than the second TV receiver 412 can be prevented from being registered.

(5) The VTR operation button is operated by the remote controller.

The remote controller 416 transmits a VTR control command to the communication address of the portable terminal 414 stored in the communication information storage section as the communication address of the VTR apparatus 404 via the transmitter. For the control command, a command conforming to a standardized control command specification is used in which there is no redundancy by an apparatus type.

Additionally, when the second TV receiver 412 is the operation object of the remote controller 416, the control command is transmitted to the VTR apparatus 404 to set the second TV receiver 412 as an output destination.

(6) The control command is transferred to the VTR apparatus from the portable terminal.

The portable terminal 414 having received the control command from the remote controller 416 uses the communication information of the VTR apparatus 404 stored in the portable terminal 414 to transmit the control command to the VTR apparatus 404.

(7) The VTR apparatus transmits an image/sound to the TV receiver.

The registration of the remote controller 416 is deleted from the portable terminal 414, transfer stop is instructed to the VTR apparatus 404 by operating the portable terminal 414, or the portable terminal 414 moves out of communication range. Thereby, the VTR apparatus 404 cannot be operated by the remote controller 416 in the living room, and the VTR apparatus 404 deletes the communication information of the second TV receiver 412 from the communication information storage section of the VTR apparatus 404.

As described above, the utilizer A can view the video of the VTR apparatus with the permitted TV receiver without transmitting the communication information of the VTR apparatus to the remote controller, and there is no fear that the VTR apparatus is utilized without permission of the utilizer A. Moreover, the utilizer A can use the VTR apparatus in the private room to enjoy the reproduced video with any TV receiver in the home.

As described above, according to the present embodiment, when means for transmitting the communication information necessary for specifying the communication apparatus via radio communication is formed as a separate unit, there can be provided an operating method of easily registering the connection relation by the radio communication even in the stationary or mounted type apparatus.

### (Third Embodiment)

In a third embodiment, an example of temporarily connecting to and communicating with a publicly installed apparatus will be described as an application example of the aforementioned embodiments.

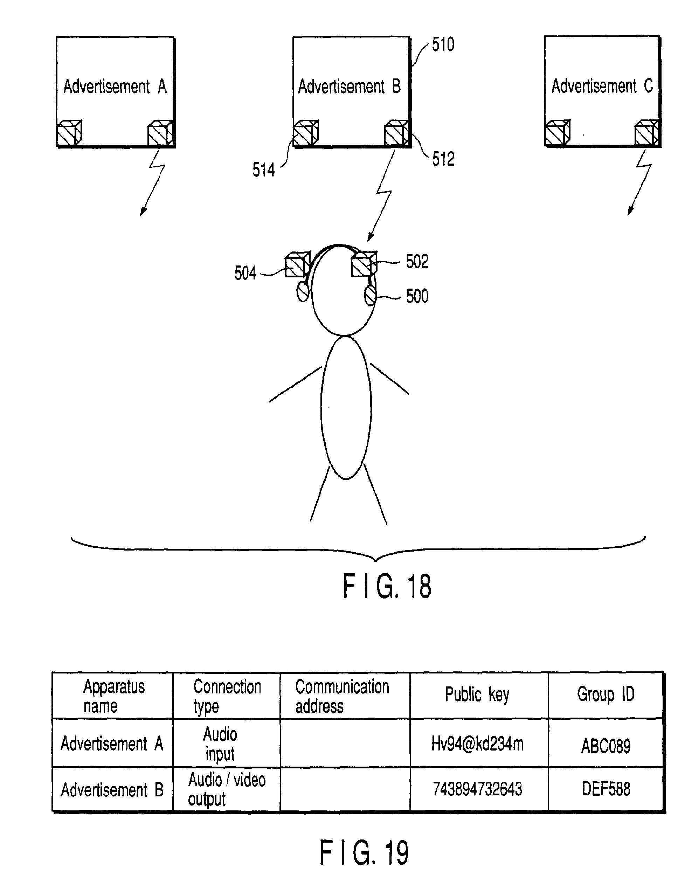

FIG. 18 shows an example in which communication is performed with a sign on a street or an advertisement in a train.

Each advertisement apparatus 510 has an information transmitter 514 and communication information transmitter 512. Information associated with advertisement is transmitted from the information transmitter 514. That is, information which cannot be written in the advertisement, reference information concerning the advertisement and advertisement content (e.g., telephone number, URL (Uniform Resource Locator)), and the like are transmitted. The communication information transmitter 512 transmits the communication information of the information transmitter 514 of the advertisement.

The utilizer puts on headphones 500 including a communication information receiver 502 and information receiver 504, for example, as shown in FIG. 18. The information receiver 504 receives the information transmitted from the information transmitter 514 of the advertisement. The communication information receiver 502 receives the communication information transmitted from the communication information transmitter 512 of the advertisement. An operation in this case will be described hereinafter.

Additionally, the headphone 500 and advertisement apparatus 510 can basically be constituted similarly as the first or second embodiment (may have a constitution similar to that of the first or second embodiment, or a partial necessary constitution of the embodiment).

(1) The communication information shown in FIG. 19 is registered beforehand in the apparatus carried by the utilizer. In the aforementioned embodiments, the communication apparatus is individually distinguished for the respective apparatuses, but in the third embodiment it is judged by a group ID whether the communication apparatus may be registered. An apparatus name column does not indicate actual individual apparatus names, and indicates a group name. The communication information on the first line of FIG. 19 indicates that sound is transmitted as the input from the group name of advertisement A. This communication information is distributed, for example, from an advertisement distribution company via Internet, or obtained through a registration window or a registration terminal.

(2) The communication information receiver 502 of the headphone 500 attached to the utilizer receives the communication information of the specific advertisement. Bluetooth™ or another communication means with a limited transmission area is used as the communication means of the communication information. In this case, when the utilizer moves to a given range around the advertisement, the communication information is received. Therefore, the present embodiment is applied to an advertisement sign on a street corner. When the utilizer comes before the sign, the information is transmitted to the utilizer to attract attention. The infrared ray or another directional communication means is used as another communication means. In this case, when the utilizer pays attention to the means, the communication information is received. Therefore, the present embodiment can be applied to the advertisement in the train or another place where there are many advertisements in a narrow range, or to a case in which the utilizer takes initiative to access the information.

(3) It is judged whether the other apparatus may be registered by comparing the group ID of the communication information received from the communication information receiver 502 of the headphone 500 with the communication information stored in the communication information storage section (see FIG. 3). When the group ID of the received information agrees with that of the stored communication information, the communication address of the received communication information is temporarily stored in a column of communication address in a line of communication information with the agreeing group ID of the headphone communication information storage section. For a storage period, the information is stored, for example, until another communication information is received, while the communication information is received from the apparatus, or until the receiving of the communication information from the other apparatus ends.

(4) The information sent from the communication address corresponding to the presently stored communication information is received by the information receiver 504, subjected to a necessary processing and reproduced/outputted via a speaker of the headphone 500.

(5) When the temporarily stored communication address is deleted, or when a signal for ending information transmission is received from the information transmitter 512 of the advertisement, the information reception is ended.

The information obtained from the advertisement is not limited to the information to be heard at the moment. For example, URL for later accessing a home page with a personal computer when returning home, telephone number for making inquiries by telephone, and other information may be distributed. Means for temporarily storing the information is disposed on the reception side such as the utilizer's headphone. For example, when returning home, the utilizer connects the carried headphone to the personal computer, stores the information obtained through one day action into the personal computer, and can take time to access or arrange the information.

Moreover, it is also possible to store program information obtained from the advertisement into one's own VTR apparatus, automatically set program reservation, and automatically turn on TV and change a channel at a time when the program starts. For example, the communication information of one's own VTR apparatus and TV is stored in the communication information storage section of the terminal in which the advertisement information is stored. When the terminal can communicate with the apparatus, an instruction for program reservation is automatically transmitted to the VTR apparatus. Alternatively, when the terminal can communicate with TV at the program start time, the program reservation can be canceled and TV can be operated to show the program.

As described above, according to the third embodiment, the publicly installed apparatus can temporarily be registered so that the utilizer can communicate with the apparatus, and a service connected to the advertisement can be realized.

### (Fourth Embodiment)

In a fourth embodiment, an example in which the terminal carried by the utilizer temporarily exchanges information with a POS (Point Of Sales) terminal to obtain a discount will be described as an application example of the aforementioned embodiments.

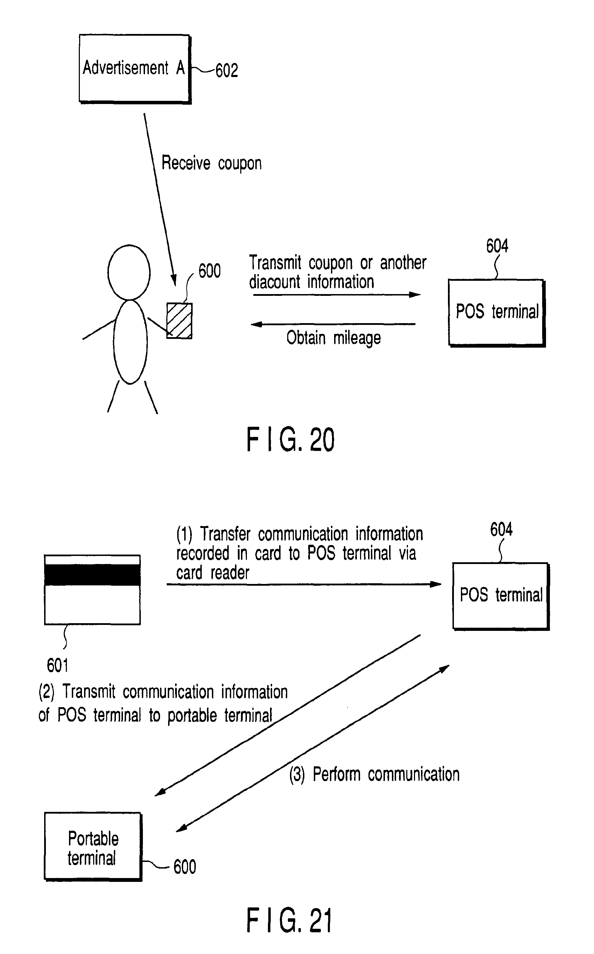

In FIG. 20, a portable terminal 600 carried by the utilizer and advertisement apparatus 602 have functions similar to those of the headphone and advertisement apparatus described in the third embodiment. In this example, the advertisement apparatus 602 distributes data such as a discount coupon (hereinafter referred to as coupon information) to the portable terminal 600. When the utilizer purchases a commodity with the usable discount coupon in a shop, the coupon information is exchanged between the POS terminal 604 of the shop and the portable terminal 600, and the discount is given. Moreover, the POS terminal 604 notifies the portable terminal 600 of a new advertisement or coupon, a mileage point generated during purchase, and the like. In order to perform this processing, it is necessary to temporarily exchange the information between the POS terminal 604 of the shop and the portable terminal 600 carried by a purchaser who is settling payment among commodity purchasers who stand in line at a check-out counter.

A procedure for communication between the portable terminal 600 and POS terminal 604 will be described hereinafter with reference to FIG. 21.

In a method of exchanging communication information between the apparatuses, similarly as the second embodiment, a magnetic card 601 is used as communication information exchange means independent of the portable terminal 600.

(1) First, the communication information of the portable terminal 600 carried by the utilizer is transmitted to the POS terminal 604.

In FIG. 21, the communication information of the utilizer's portable terminal 600 is recorded in a magnetic tape portion of the magnetic card 601, the card is read via a card reader of the POS terminal 604, and the communication information of the utilizer's portable terminal 600 is transmitted to the POS terminal 604.

(2) The POS terminal 604 transmits its own communication information to the portable terminal 600.

(3) The coupon information stored in the portable terminal 600 is transmitted to the POS terminal 604, discount, settlement is performed by the POS terminal 604 using the discount coupon for the purchased commodity, and the POS terminal 604 transmits the new coupon, mileage point generated by the purchase, and other information to the portable terminal 600.

In this case, even when many people stand in line before the POS terminal 604, the settling person communicates with the carried portable terminal 600 and utilizes an electronic coupon to perform the settlement.

Additionally, the magnetic card is used as means for transmitting the communication information of the portable terminal 600 to the POS terminal 604 as described above. However, instead of the magnetic card, an IC card, card with a bar code printed thereon, and the like may of course be used. Moreover, for example, a pendant, a ring, or another form which can emit the communication information via the infrared ray or a very weak radio wave and transmit the communication information to the POS terminal may be utilized.

Moreover, a card integral type portable terminal may be used in which a calculation unit and radio communication unit are disposed in a card itself.

Additionally, in the example of using the card in the notification of the communication information, when the card also serves as a credit card, the portable terminal can be used as identification means so that safety against a forged credit card can be enhanced. In this case, since the utilizer preferably always puts on the portable terminal, the portable terminal may be formed as the pendant, the ring, or a pair of glasses.

In this case, when the utilizer utilizes the credit card, the communication information is read together with credit card information. A credit settlement terminal uses the communication information to communicate with the portable terminal carried by the utilizer, identifies the utilizer from a communication result, and judges whether or not to execute credit settlement.

An identifying method will be described hereinafter.

The communication information read from the credit card includes, for example, the public key shown in FIG. 6, and the information encrypted with this public key can be decoded only by the portable terminal which forms a pair with the credit card. This is used, and the utilizer is identified by checking that the utilizer has the pair of the credit card and the corresponding portable terminal. The credit settlement terminal sends data (e.g., random number) encrypted with the public key recorded in the credit card presented by the utilizer to the utilizer's portable terminal, and requests the terminal to return a decoded result. The credit settlement terminal compares the decoded result returned from the utilizer's portable terminal with the data before encryption of the (encrypted) data sent to the utilizer's portable terminal. If the result is correct, it is judged that a combination of the credit card and portable terminal is correct, and credit is settled. If the returned data is not correct, or if the credit card settlement terminal cannot communicate with or connect to the utilizer's terminal, the terminal notifies that there is a possibility of injustice, and the settlement is stopped.

Even if the credit card is stolen or forged, the credit card cannot be used without the portable terminal. Therefore, this can be utilized more safely than the existing card-only system.

Additionally, instead of recording the communication information in the card magnetic portion, a system may be used in which ID information is recorded in the credit card and a server for managing a correspondence between the credit utilizer's communication information and ID information is disposed. In this system, the credit settlement terminal reads the ID information recorded in the credit card and transmits the information to the server, and the server returns the communication information of the portable terminal of a credit card owner to the settlement terminal.

Moreover, a server for managing an access of the portable terminal to the advertisement apparatus is disposed, and combined with a position information system in which a portable terminal position can be found. The utilizer may be identified by checking whether a place with the terminal carried by the card owner oneself positioned therein agrees with a place with the card used therein in a given range (or whether these places are in a correct position relation).

Moreover, these methods may be combined and utilized.

Furthermore, another system may be used in which a terminal is constituted by disposing a transmitter/ receiver in the card, the card communication information transmitter is set to be independent, for example, as a pendant-shaped unit, and the card and pendant-shaped unit are carried.

As described above, according to the fourth embodiment, the information can temporarily be exchanged between the portable terminal carried by the utilizer and the POS terminal of the shop, and the coupon or the like can easily be managed. Moreover, carrying of a plurality of combined units is utilized in the identification of the utilizer, and the utilizer can more safely be identified during utilization of the credit.

### (Fifth Embodiment)

In a fifth embodiment, as an application example of the aforementioned embodiments, another example will be described in which an automatic ticket gate system temporarily exchanges the information with the utilizer's carrying terminal to perform a ticket inspection pass procedure.

In a conventional automatic ticket gate system, a non-contact automatic ticket gate system has been developed in which a commuter pass does not have to be taken out of a pass holder to enhance ticket inspection pass efficiency. As one means, a radio commuter pass and automatic ticket gate system have been developed.

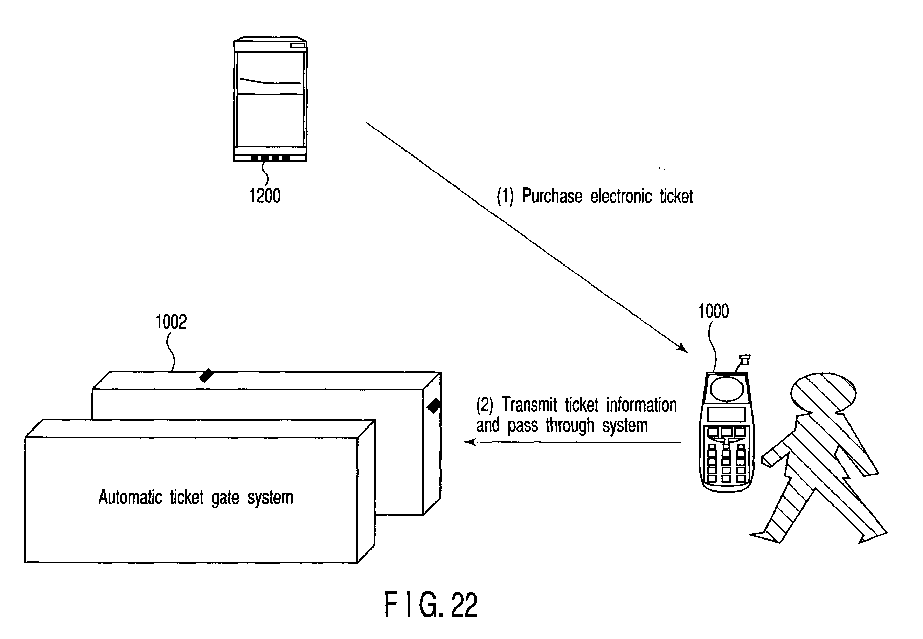

On the other hand, in the fifth embodiment, as shown in FIG. 22, (1) a cellular phone 1000 accessible via Internet, such as i-mode™, is utilized to purchase an electronic ticket from an Internet site (e.g., electronic ticket information is downloaded to the cellular phone 1000 from a ticket server 1200), and (2) the cellular phone 1000 with the electronic ticket information stored therein performs a short-distance radio communication with an automatic ticket gate system 1002 so that the utilizer can directly pass through the automatic ticket gate system.

In the conventional radio automatic ticket gate system, an exclusive radio IC card or the like is utilized to weaken a radio wave output so that communication can be performed only in a very narrow range. This prevents radio interference. In the cellular phone having a short-distance communication function as an object of the fifth embodiment, however, it is assumed that the cellular phone is connected to various peripherals such as PC and headset. Therefore, since a communication distance is several meters or more, it is necessary to avoid a problem that radio interference occurs with a plurality of arranged automatic ticket gate systems and passengers walking back and forth or around.

In the fifth embodiment, the constitution of the application example of the POS terminal described in the fourth embodiment with reference to FIG. 21 is also applied to the automatic ticket gate system. Thereby, the aforementioned problem is solved, and a system is realized in which the electronic ticket purchased via a portable Internet terminal such as the cellular phone is used to perform automatic ticket inspection.

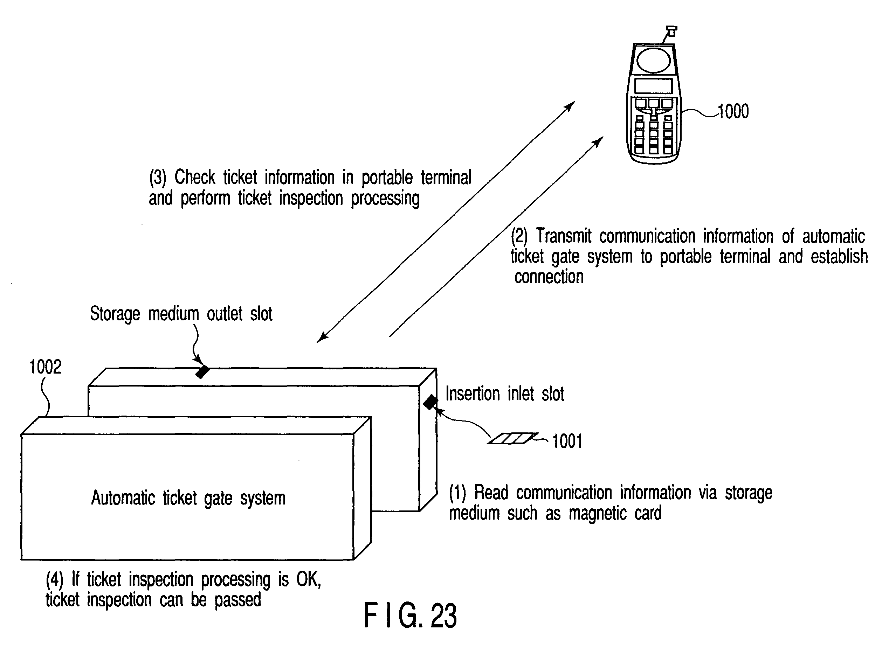

A procedure for communication between the cellular phone 1000 and automatic ticket gate system 1002 will be described hereinafter with reference to FIG. 23.

In the method of exchanging the identification information between the apparatuses, similarly as the second and fourth embodiments, a storage medium 1001 of FIG. 23 is used as identification information exchange means independent of the cellular phone 1000. It is assumed that at least the communication information of the cellular phone 1000 carried by the utilizer is recorded in the storage medium 1001. Moreover, a case will be described in which mediums readable with a ticket reading mechanism of the automatic ticket gate system, such as the magnetic card represented by the conventional commuter pass and next-generation non-contact card, are used as the storage medium 1001.

The portable terminal 1000 is a terminal represented by the cellular phone carried by the utilizer, and has two functions, that is, a communication function of performing a short-distance radio communication with the automatic ticket gate system 1002 (hereinafter referred to as communication function A) and a communication function of a public circuit such as a cellular phone circuit (hereinafter referred to as communication function B). By an Internet access function as the communication function B represented by i-mode™, electronic ticket information is downloaded beforehand into the portable terminal 1000 from a ticket reservation sale site (see FIG. 22).

The portable terminal 1000 has, for example, the constitution 220 of FIG. 11B. In this case, the transmitter 24 and receiver 25 are a short-distance radio and cellular phone circuit such as Bluetooth™. Additionally, in this case, the communication information receiver 22 of FIG. 11B may be omitted.

On the other hand, the storage medium 1001 for storing the identification information of the portable terminal 1000 has, for example, the constitution 210 of FIG. 11A, and the communication information transmitter 12 is a magnetic tape or a micro-distance faint radio adapted for the reading mechanism of the automatic ticket gate system 1002.

The automatic ticket gate system 1002 has, for example, the constitution shown in FIG. 3. More concretely, the system herein has: a reader for reading the information of the storage medium having the same form as that of an ordinary ticket (contact or non-contact ordinary ticket); a communicator such as Bluetooth™ for performing a short-distance radio communication with the portable terminal 1000; and a processor for judging from ticket information obtained as a communication result whether or not ticket inspection can be passed and performing a ticket inspection pass processing or an error processing in accordance with a judgment result.

In this case, for example, the reader corresponds to the communication information exchanger 2, the communicator corresponds to the transmitter 4 and receiver 5, an automatic ticket gate system main body (including a gate for inhibiting the utilizer from passing and a gate open/close mechanism) corresponds to the main apparatus 162, and the processor is included in the controller 1.

One example of a procedure for passing automatic ticket inspection will be described hereinafter.

(1) First, the utilizer who is going to pass transmits the communication information of the portable terminal 1000 carried by oneself to the automatic ticket gate system 1002.

In FIG. 23, the communication information of the utilizer's portable terminal 1000 is recorded in the magnetic portion of the storage medium 1001. When the storage medium 1001 is read via a ticket reading mechanism of the automatic ticket gate system 1002, the communication information of the utilizer's portable terminal 1000 is transmitted to the automatic ticket gate system 1002.

(2) Subsequently, the automatic ticket gate system 1002 transmits its own communication information to the portable terminal 1000, and establishes a connection with the portable terminal 1000 by the communication function A.

(3) The ticket information stored in the portable terminal 1000 is transmitted to the automatic ticket gate system 1002 from the portable terminal 1000. On the side of the automatic ticket gate system 1002, information such as a boarding division is checked, for example, a processing of adding boarding record to the ticket information stored in the portable terminal 1000 is performed during boarding, and a processing of invalidating the ticket information stored in the portable terminal 1000 is performed during getting off.

(4) Subsequently, the automatic ticket gate system 1002 returns the storage medium 1001 or opens/closes a gate of the automatic ticket gate system in accordance with a ticket information check result.

As described above, even when many automatic ticket gate systems are arranged, and a plurality of passengers stand back and forth in line, the person going to pass the ticket inspection can communicate with the carried portable terminal to utilize the electronic ticket and perform the ticket inspection processing.

Another example of the procedure for passing the automatic ticket inspection will next be described.

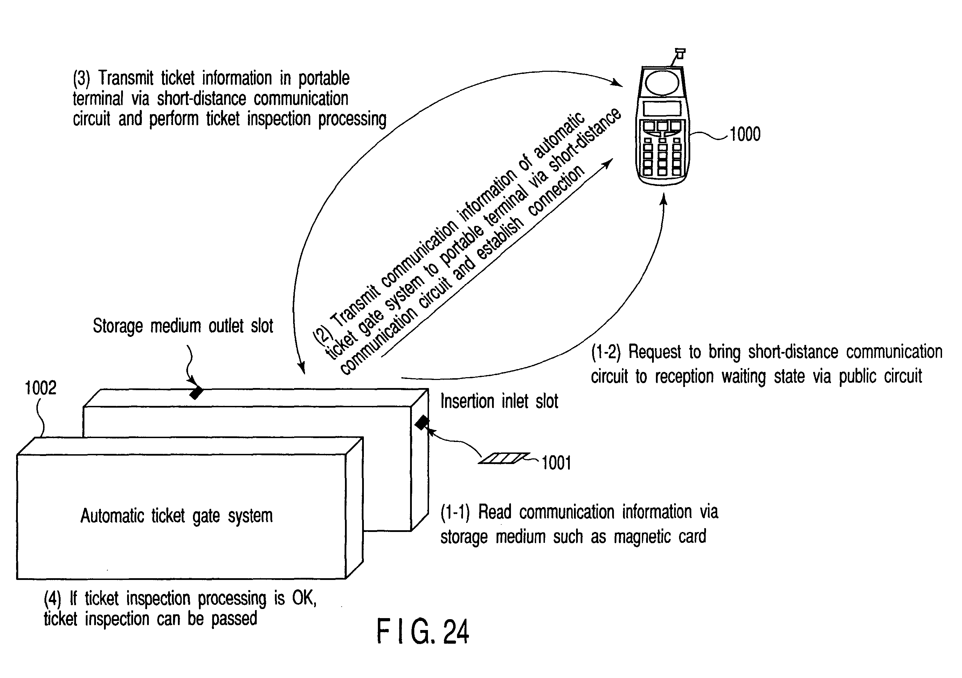

FIG. 24 is an example constituted by adding a procedure to the communication procedure (1) of FIG. 23.

As the communication function A as short-distance communication means, utilization of IrDA or Bluetooth™ is considered. Here, a case will be described in which different from the cellular phone circuit or the like, in the communication function A, communication cannot necessarily be in a waiting state.

When the automatic ticket gate system 1002 transmits information to the portable terminal 1000, and the communication function A is not in the waiting state, the connection by the communication function A cannot be established between the automatic ticket gate system 1002 and the portable terminal 1000. Moreover, the procedure for passing the ticket inspection cannot be performed. Therefore, in FIG. 23, with the communication function A not always brought to the waiting state, for example, it is necessary to repeatedly perform the procedure (2) until the communication function A is brought to the waiting state.

Therefore, in the present example, for example, the cellular phone circuit in which communication can always be brought to the waiting state is used as the communication function B of the portable terminal 1000. Moreover, not only the communication information of the communication function A of the portable terminal 1000 but also the communication information of the communication function B are recorded in the storage medium 1001.

Furthermore, similarly as FIG. 23, (1-1) the utilizer going to pass transmits the communication information of the carried portable terminal 1000 to the automatic ticket gate system 1002. Subsequently, (1-2) the automatic ticket gate system 1002 instructs the portable terminal 1000 via the communication function B to bring the communication function A of the portable terminal 1000 to the waiting state.

Thereafter, the processing is executed in the same procedure as that of FIG. 23.

Additionally, the constitution concerning the communication functions A and B can also be applied to the aforementioned embodiments.

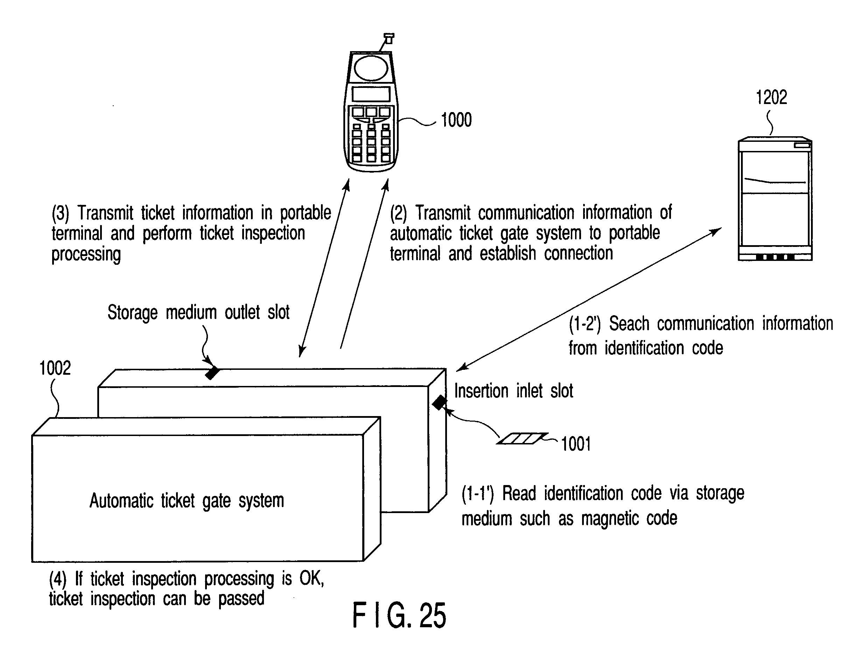

Next, FIG. 25 shows an example in which not the communication information but an identification code forming a pair with the communication information is recorded in the storage medium 1001, the pair of the communication information and identification code is managed by a communication information server 1202, and the automatic ticket gate system 1002 obtains the corresponding communication information from the communication information server 1202 based on the identification code read from the storage medium 1001.

For example, the utilizer has a plurality of portable terminals 1000 and types are possibly periodically changed. There is also a possibility that the storage medium 1001 is lost or disposable. Therefore, a combination of the portable terminal 1000 and storage medium 1001 can preferably easily be changed. Here, in a method of realizing this, as shown in FIG. 25, the communication information server 1202 is added to FIG. 23 or FIG. 24.

The following procedure is based on the procedure of FIG. 23 and the procedure (1) is performed in the following two stages.

(1-1') The identification code stored in the storage medium 1001 is read via the ticket reading mechanism of the automatic ticket gate system 1002.

(1-2') The automatic ticket gate system 1002 transmits the read identification code to the communication information server 1202, and searches the corresponding communication information.

Thereafter, the communication information obtained from the communication information server 1202 is used to similarly perform the procedure (2) and subsequent procedures of FIG. 23 and perform the ticket inspection processing.

For the procedure of FIG. 24, the procedure (1-1) is performed in the above two stages, and thereafter the communication information obtained from the communication information server is used to similarly perform the procedure (1-2) and subsequent procedure and perform the ticket inspection processing.

Additionally, the communication method between the automatic ticket gate system 1002 and communication information server 1202 is not particularly limited.

Next, a procedure for registration to the communication information server 1202 from the portable terminal 1000 will be described with reference to FIG. 26.

The procedure is, for example, as follows.

(1) A code of storage medium 1001 is inputted to the portable terminal 1000.

Examples of an inputting method include: a method of inputting a code printed on the surface of the storage medium 1001 with ten keys of the portable terminal 1000; a method of disposing the storage medium 1001 having a mechanism in which an attachable/ detachable memory card is inserted, detaching the memory card from the medium, and inserting the card into a memory slot of the portable terminal 1000 to input the code; a method of inputting the code by the reading mechanism such as a card reader of the portable terminal 1000; and other various methods.

(2) The portable terminal 1000 connects to the communication information server 1202, and registers a combination of identification information and communication information.

Additionally, examples of a registering procedure include a procedure of connecting to the communication information server to call an exclusive registration interface screen and interactively inputting the combination.

Moreover, the examples also include a reverse registration procedure of connecting to the communication information server to register the communication information, allowing the server to issue the identification information, and inputting the identification information to the storage medium.

Additionally, the method for communication between the portable terminal 1000 and communication information server 1202 is not particularly limited.

Moreover, after passing through the ticket inspection once, the ticket information stored in the portable terminal 1000 is recorded in the storage medium 1001 together with the boarding record. The storage medium 1001 may be utilized as the ordinary ticket in the subsequent ticket inspection processing.

Furthermore, a function adapted for both the original ticket and the aforementioned portable terminal 1000/storage medium 1001 may be imparted to the automatic ticket gate system 1002, so that the user can arbitrarily select and use the ordinary ticket and the portable terminal 1000/storage medium 1001.

Examples of means for transmitting the communication information of the portable terminal 1000 to the automatic ticket gate system 1002 include the magnetic card and non-contact card (magnetic tape and micro-distance faint radio). Alternatively, the examples include the card with the communication information printed thereon using the bar code, pendant form, ring form, and other forms for emitting the communication information via a very weak radio wave.

As described above, there can be realized an automatic ticket gate system in which the portable Internet terminal is used to purchase the electronic ticket via Internet and the automatic ticket gate system can directly be passed.

Additionally, the aforementioned respective functions may be realized as software.

Moreover, the present embodiment can be carried out as computer-readable recording medium in which a program for allowing a computer to execute predetermined means (operating the computer as predetermine means, or allowing the computer to realize a predetermined function) is recorded.

According to the present invention, there can be realized an information exchange system in which the information is exchanged among predetermined apparatuses and additionally the utilizer of the apparatuses can later freely change the communication connection relation of the apparatuses. Moreover, the apparatus having no operation interface such as the button can also be an object. For each apparatus, it is unnecessary to input ID or operate the button in a complicated manner. Therefore, there can also be provided an intuitive and easy operating method for the utilizer.

Moreover, according to the present embodiment, since means for transmitting the communication information necessary for specifying the communication apparatus via radio communication is formed as a separate unit, there can be provided an operating method of easily registering the connection relation by the radio communication even in the stationary or mounted type apparatus.

Furthermore, according to the present invention, for example, the communication for temporarily registering the apparatus can be performed with the publicly installed apparatus, and service associated with advertisement can be realized.

Additionally, according to the present invention, for example, the information can temporarily be exchanged between the portable terminal carried by the utilizer and the POS terminal of the shop, and the coupon, and the like can easily be managed. Moreover, the utilizer is identified by checking that the utilizer has the combination of a plurality of units, so that the utilizer can more safely be identified during utilization of the credit.

## Claims

1. An information exchange apparatus **characterized by** comprising:
a communication information exchange device (2) configured to transmit communication information of a first apparatus (162, 164) to a second apparatus, the communication information including identification information which is used for making the second apparatus to specify the first apparatus (162, 164) to start a radio communication;
a radio communication device (4, 5) associated with the first apparatus (162, 164) configured to communicate with the second apparatus by radio; and
a controller (1), connected between the communication information exchange device (2) and the radio communication device (4, 5), configured to make the radio communication device (4, 5) to start the radio communication with the second apparatus after transmitting said communication information to the second apparatus.

2. An information exchange apparatus according to claim 1, **characterized in that** said communication information exchange device (2) comprises a connector which is directly connected to the second apparatus when transmitting said communication information.

3. An information exchange apparatus according to claim 1, **characterized in that** said communication information exchange device (2) comprises a directional radio communication interface including IrDA (Infrared Data Association).

4. An information exchange apparatus according to claim 1, **characterized in that** said communication information exchange device (2) comprises a public phone interface.

5. An information exchange apparatus according to claim 1, **characterized in that** said communication information exchange device (2) comprises a cable which is connected to the second apparatus when transmitting said communication information.

6. An information exchange apparatus according to claim 1, **characterized in that** said identification information includes at least one of apparatus name, connection type, and communication address.

7. An information exchange apparatus **characterized by** comprising:
a communication information exchange device (2) configured to:
transmit communication information of a first apparatus (162, 164) to a second apparatus, the communication information including identification information which is used for making the second apparatus to specify the first apparatus (162, 164) to start a radio communication, or;
receive communication information from the second apparatus, the communication information of the second apparatus including identification information which is used for making the first apparatus (162, 164) to specify the second apparatus to start the radio communication;
a radio communication device (4,5) associated with the first apparatus (162, 164) configured to communicate with the second apparatus by radio; and
a controller (1), connected between the communication information exchange device (2) and the radio communication device (4,5), configured to make the radio communication device (4,5) to start the radio communication with the second apparatus after transmitting said communication information of the first apparatus (162, 164) to the second apparatus or receiving said communication information from the second apparatus.

8. An information exchange apparatus according to claim 7, **characterized in that** said communication information exchange device (2) comprises a connector which is directly connected to the second apparatus when transmitting/receiving said communication information.

9. An information exchange apparatus according to claim 7, **characterized in that** said communication information exchange device (2) comprises a directional radio communication interface including IrDA (Infrared Data Association).

10. An information exchange apparatus according to claim 7, **characterized in that** said communication information exchange device (2) comprises a public phone interface.

11. An information exchange apparatus according to claim 7, **characterized in that** said communication information exchange device (2) comprises a cable which is connected to the second apparatus when transmitting/ receiving said communication information.

12. An information exchange apparatus according to claim 7, **characterized in that** said identification information includes at least one of apparatus name, connection type, and communication address.

13. An information exchange apparatus
**characterized by** comprising:
a first device (10,11,12,13) disposed in a remote control (210) associated with a first apparatus (220), the first device including a transmitter (12) configured to transmit communication information of the first apparatus (220) to a second apparatus, the communication information including identification information which is used for making the second apparatus to specify the first apparatus (220 )to start a radio communication;
a second device (220, 22) configured to receive communication information of the second apparatus, the communication information including identification information which is used for making the first apparatus (220) to specify the second apparatus to start the radio communication;
a radio communication device (24, 25) associated with the first apparatus configured to communicate with the second apparatus by radio; and
a controller (20) configured to make the radio communication device (24, 25) to start the radio communication with the second apparatus.

14. A ticket gate system which is communicate with a user's terminal by radio, the system **characterized by** comprising:
a reader configured to read communication information of the user's terminal (1000) from a storing medium (1001) inserted through an inlet slot, the communication information including identification information which is used for making the ticket gate system (1002) to specify the user's terminal (1000) to establish a connection of radio communication;
a radio communication device disposed in the ticket gate system (1002) configured to communicate with the user's terminal (1000) by radio; and
a ticket inspection device configured to make the radio communication device to receive ticket information from the user's terminal (1000) by specifying the user's terminal based on said communication information read by the reader, perform a ticket inspection processing by using of the received ticket information, and eject the storing medium (1001) through an outlet slot after the ticket inspection processing.

15. A method of a radio communication between first and second apparatuses, the method **characterized by** comprising:
transmitting communication information of the first apparatus (162, 164) to the second apparatus, the communication information including identification information which is used for making the second apparatus to specify the first apparatus (162, 164) to start a radio communication;
establishing a connection between the first and second apparatuses by using of the communication information; and
starting a radio communication by a radio communication device (4,5) associated with the first apparatus (162, 164) after transmitting said communication information to the second apparatus.

16. A method of a radio communication between first apparatus (220) which is associated with a remote control (210) and a second apparatus, the method **characterized by** comprising:
transmitting communication information from the remote control (210) to the second apparatus, the communication information including identification information which is used for making the second apparatus to specify the first apparatus (220) to start a radio communication;
establishing a connection between the first and second apparatuses by using of the communication information;
starting a radio communication by a radio communication device (24,25) associated with the first apparatus (220) after transmitting said communication information to the second apparatus.

17. A method of a radio communication between a ticket gate system and a user's terminal, the method **characterized by** comprising:
reading communication information of the user's terminal (1000) from a storing medium (1001) which is inserted into the ticket gate system (1002) through an inlet slot;
specifying the user's terminal (1000) and establishing a connection of radio communication by using of the read communication information;
receiving ticket information from the user's terminal (1000) to the ticket gate system (1002) based on the established connection;
performing a ticket inspection processing by using of the received ticket information; and
ejecting the storing medium (1001) through an outlet slot after the ticket inspection processing from the ticket gate system (1002).
